# EUROPEAN PATENT SPECIFICATION

(11) **EP 1 734 719 B1**
(45) Date of publication and mention of the grant of the patent: **02.12.2009**
(21) Application number: 05253771.9
(22) Date of filing: 17.06.2005
(51) Int. Cl.: H04L 29/06

(54) **Encoding messages for use in a communication system based on security classification status**
Verschlüsselung von Nachrichten zum Gebrauch in einem Kommunikationssystem basierend auf dem Sicherheitsklassifikationsstatus
Encodage de messages utilisant un système de communication basé sur le statut de classification de sécurité

(43) Date of publication of application: 20.12.2006
(73) Proprietor: Research In Motion Limited, Waterloo, Ontario N2L 3W8 (CA)
(72) Inventor: Brown, Michael K., Kitchener Ontario N2M 2Z2 (CA); Little, Herbert A., Waterloo Ontario N2T 2V8 (CA); Brown, Michael S., Waterloo Ontario N2K 4B1 (CA); McCallum, Michael E., Elmira Ontario N3B 3M2 (CA); Totzke, Scott W., Waterloo Ontario N2K 3Y5 (CA); Adams, Neil P., Waterloo Ontario N2K 4E4 (CA)
(74) Representative: Hibbert, Juliet Jane Grace

(56) References cited:
- EP-A- 1 324 541
- EP-A- 1 494 121
- US-A1- 2003 182 435

## Description

### BACKGROUND

### 1. Field of Technology

This application generally relates to communication systems capable of encoding messages for security purposes.

### 2. Related Art

US 2003/0182435 A1 discloses a system and method for extracting security sensitive information from a data object and separating the extracted information from the remainder of the document.

EP-A-1494121 discloses a method and apparatus for changing a communication mode for a device based on its environment.

Governments, and some corporations, typically use a security classification system to determine the sensitivity level of information in documents and email. Such security classification system varies between different countries and different organizations.

Once the classification level of information is set, it is important to make sure the appropriate security policies are uniformly always applied. When classifications are applied to email, what is needed is a method to enforce appropriate message encoding based on the classification status set (e.g., classification level, strength of encryption, etc.).

There is a prior solution for adding classification to Outlook (TM owned by Microsoft Corporation) messages. It is called "Classify" and is found on the World Wide Web at "markwilson.ca/products.html". The product is a plug-in for Outlook (TM) which allows one to add classification to a message. However, the classification level is not necessarily tied to message encoding. Accordingly, there is no way to enforce, for example, that all "secret" and above messages must be encrypted.

### SUMMARY

To solve this problem, we allow the Information Technology (IT) Administrator (through IT Policy) to set a desired mapping between available classification statuses and the corresponding applicable message encoding levels. This could be an explicit mapping (such as "Secret" = "Encrypted") or it could be a series of minimums (such as "Confidential" >= "Signed").

This information could, for example, get "pushed" to a remote wireless communication device through such an IT Policy. Once resident on the device, when the user wants to send a message, the device application logic would look at the current classification level set by the user and compare the current message encoding to what it should be based on IT Policy. If it is unspecified, of course, it can just be sent as is. If it is specified, and the encoding currently specified for use is not at least of minimum required strength, the encoding would be automatically bumped up to the appropriate level (i.e., from Plaintext to Signed and Encrypted). Preferably this would be seamless to the user.

This enforced encoding logic also can be made more granular than just specifying the specific message encoding. For example, as a further variation, the IT Administrator could also (or instead) specify a "strength" level to indicate algorithms that should be used for the encryption. For example, a "Secret" classification may correspond to a "Strong" strength which could mean the public key algorithms used must be >= 2048 bits and the symmetric algorithm must be AES-192 or above. But "Top Secret" classification may correspond to "Extra Strong" which would mean public key algorithms used must be >=4096 bits and the symmetric algorithm must be AES-256 or above.

These embodiments may be realized in hardware, software or a combination of hardware and software and provide a method for enhancing the ability to encode messages based on classification status (e.g., in a wireless communication device). The exemplary embodiments are realized at least in part, by executable computer program code which may be embodied in physical digital memory media.

### BRIEF DESCRIPTION OF THE DRAWINGS

Objects and advantages of the approach described herein will be better understood and appreciated in conjunction with the following detailed description of exemplary embodiments taken together with the accompanying drawings, of which:
FIG. **1** is an overall system wide schematic view of an exemplary wireless email communication system incorporating a mobile wireless communication device having enhanced ability to encode messages based on classification status;
FIG. **2** is an abbreviated schematic diagram of hardware included within an exemplary mobile wireless communication device;
FIG. **3** is an exemplary abbreviated schematic flow diagram of computer software (i.e., program logic) that may be utilized in the device of FIG. 2 to enforce an IT Policy of encryption encoding according to classification status (e.g., classification level or encryption strength);
FIG. **4** is a table depicting an exemplary IT Policy for use in the program logic of FIG. **3****;** and
FIG. **5** is an exemplary abbreviated schematic flow diagram of computer software (i.e., program logic) that may be utilized in the device of FIG 2 to insure at least a minimum encoding level.

### DETAILED DESCRIPTION OF EXEMPLARY EMBODIMENTS

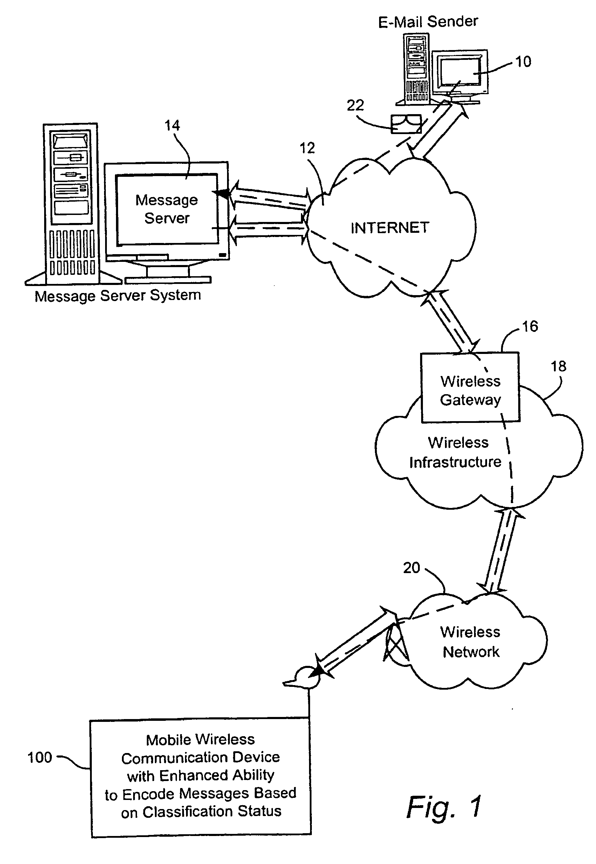

FIG. **1** is an overview of an exemplary communication system in which a wireless communication device **100** may be used. One skilled in the art will appreciate that there may be hundreds of different system topologies. There may also be many message senders and recipients. The simple exemplary system shown in FIG. 1 is for illustrative purposes only, and shows perhaps the currently most prevalent Internet email environment.

FIG. **1** shows an email sender **10,** the Internet **12,** a message server system **14,** a wireless gateway **16,** wireless infrastructure **18,** a wireless network **20** and a mobile communication device **100.**

An email sender **10** may, for example, be connected to an ISP (Internet service Provider) on which a user of the system has an account, located within a company, possibly connected to a local area network (LAN), and connected to the Internet **12,** or connected to the Internet **12** through a large ASP (application service provider) such as America Online™ (AOL). Those skilled in the art will appreciate that the systems shown in FIG **1** may instead be connected to a wide area network (WAN) other than the Internet, although email transfers are commonly accomplished through Internet-connected arrangements as shown in FIG. **1****.**

The message server **14** may be implemented, for example, on a network computer within the firewall of a corporation, a computer within an ISP or ASP system or the like, and acts as the main interface for email exchange over the Internet **12.** Although other messaging systems might not require a message server system **14,** a mobile device **100** configured for receiving and possibly sending email will normally be associated with an account on a message server. Perhaps the two most common message servers are Microsoft Exchange™ and Lotus Domino™. These products are often used in conjunction with Internet mail routers that route and deliver mail. These intermediate components are not shown in FIG. **1****,** as they do not directly play a role in the invention described below. Message servers such as server **14** typically extend beyond just email sending and receiving; they also include dynamic database storage engines that have predefined database formats for data like calendars, to-do lists, task lists, email and documentation.

The Wireless gateway **16** and infrastructure **18** provide a link between the Internet **12** and wireless network **20.** The wireless infrastructure **18** determines the most likely network for locating a given user and tracks the users as they roam between countries or networks. A message is then delivered to the mobile device **100** via wireless transmission, typically at a radio frequency (RF), from a base station in the wireless network **20** to the mobile device **100.** The particular network **20** may be virtually any wireless network over which messages may be exchanged with a mobile communication device.

As shown in FIG. **1****,** a composed email message **22** is sent by the email sender **10,** located somewhere on the Internet **12.** This message **22** typically uses traditional Simple Mail Transfer Protocol (SMTP), RFC 822 headers and Multipurpose Internet Mail Extension (MIME) body parts to define the format of the mail message. These techniques are all well known to those skilled in the art. The message **22** arrives at the message server **14** and is normally stored in a message store. Most known messaging systems support a so-called "pull" message access scheme, wherein the mobile device **100** must request that stored messages be forwarded by the message server to the mobile device **100.** Some systems provide for automatic routing of such messages which are addressed using a specific email address associated with the mobile device **100.** In a preferred embodiment, messages addressed to a message server account associated with a host system such as a home computer or office computer which belongs to the user of a mobile device **100** are redirected from the message server **14** to the mobile device **100** as they are received. Messages will typically be encrypted from sender to receiver by utilizing a key that is unique to a given device. Examples of two commonly used methods are the Data Encryption Standard (Triple - DES) and the Advanced Encryption Standard (AES).

Regardless of the specific mechanism controlling forwarding of messages to mobile device **100 ,** the message **22,** or possibly a translated or reformatted version thereof, is sent to wireless gateway **16.** The wireless infrastructure **18** includes a series of connections to wireless network **20.** These connections could be Integrated Services Digital Network (ISDN), Frame Relay or T1 connections using the TCP/IP protocol used throughout the Internet. As used herein, the term "wireless network" is intended to include three different types of networks, those being (1) data-centric wireless networks, (2) voice-centric wireless networks and (3) dual-mode networks that can support both voice and data communications over the same physical base stations. Combined dual-mode networks include, but are not limited to, (1) Code Division Multiple Access (CDMA) networks, (2) the Group Special Mobile or the Global System for Mobile Communications (GSM) and the General Packet Radio Service (GPRS) networks, and (3) future third-generation (3G) networks like Enhanced Data-rates for Global Evolution (EDGE) and Universal Mobile Telecommunications Systems (UMTS). Some older examples of data-centric network include the Mobitex™ Radio Network and the DataTAC™ Radio Network. Examples of older voice-centric data networks include Personal Communication Systems (PCS) networks like GSM, and TDMA systems.

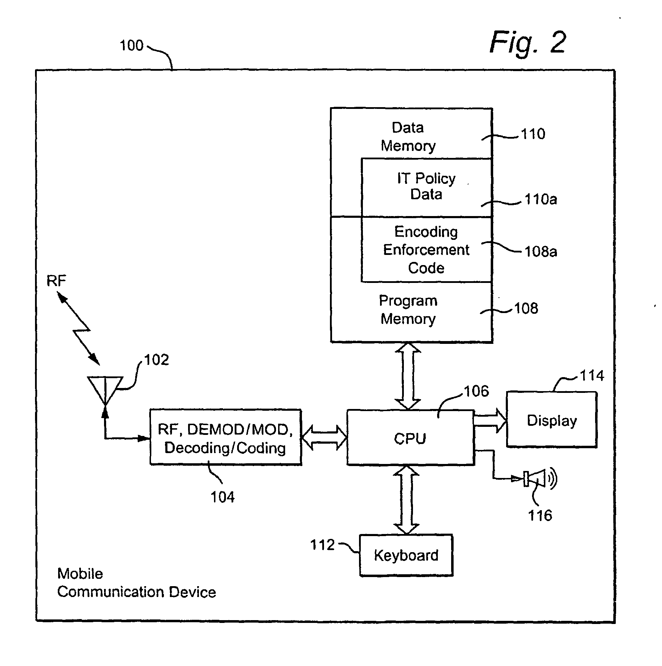

As depicted in FIG. **2****,** mobile communication device **100** includes a suitable RF antenna **102** for wireless communication to/from wireless network **20.** Conventional RF, demodulation/modulation and decoding/coding circuits **104** are provided. As those in the art will appreciate, such circuits can involve possibly many digital signal processors (DSPs), microprocessors, filters, analog and digital circuits and the like. However, since such circuitry is well known in the art, it is not further described.

The mobile communication device **100** will also typically include a main control CPU 106 which operates under control of a stored program in program memory **108** (and which has access to data memory **110).** CPU **106** also communicates with a conventional keyboard **112,** display **114** (e.g., an LCD) and audio transducer or speaker **116.** A portion of data memory **110a** is available for storing IT Policy data used to control associated device operations. Suitable computer program executable code is stored in portions of program memory **108a** to constitute the program logic for enforcing the IT Policy insofar as encoding according to message classification status capability is described below.

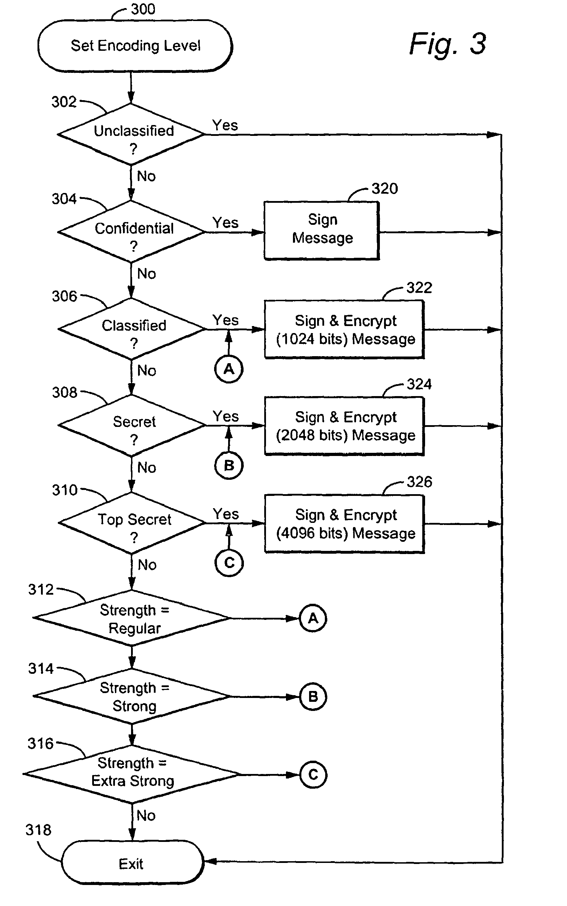

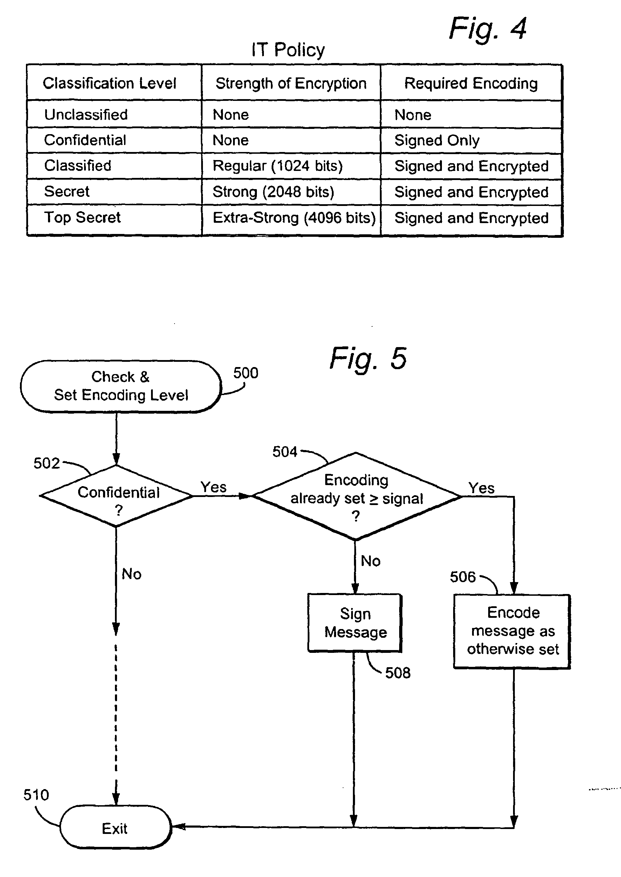

One exemplary encoding enforcement logic is depicted at FIG. **3****.** Here the "Set Encoding Level" routine **300** may be entered in any desired fashion. For example, it may be manually entered when a user manually sets a classification level or encryption strength parameter. Alternatively, this logic may be forcibly entered as a part of and prior to a message transmission sequence so that it is necessarily traversed for every message generated and/or transmitted from device **100.** The logic itself as well as an associated IT Policy (e.g., see FIG. **4****)** may be downloaded from an enterprise base station (again possibly forcibly "pushed" into every enterprise user device **100).**

Suitable tests are made at decision points **302, 304, 306, 308, 310, 312, 314** and **316** to automatically detect which one of plural possible classification statuses have been associated with the message at hand. As will be appreciated, a code representing a particular classification status (i.e., classification level or strength of encryption) can be realized as a field appended to the body or header of a given message. Alternatively, a separate table or database of classification statuses may be maintained in association with other unique message identification data (e.g., sequential serial message numbers or the like). As will be appreciated, the number of decision points will depend upon the number of different classification statuses that are permitted in accordance with a given IT Policy.

In accordance with the IT Policy set forth at FIG. **4****,** if the message is associated with an unclassified classification level or no strength of encryption, then the routine will be exited at **318** without any special encryption coding requirement. However, in accordance with the IT Policy of FIG. **4****,** if a classification level of "confidential" is detected at **304,** then the message is merely signed at **320** before exit of the sub-routine is taken at **318.** However, if the classification status of "classified" or "regular" encryption strength is detected, then the message is signed and encrypted with a 1024 bit encryption key at **322** before the sub-routine is exited at **318.** Similarly, if a classification level of "secret" or an encryption strength of "strong" is detected, then the message is signed and encrypted using a longer (e.g., 2048 bit) key at **324.** Finally, if a classification level of "top secret" or an encryption strength of "extra strong" is detected, then the message is signed and encrypted with a yet more secure longer 4096 bit encryption key at **326.**

If it is only desired to insure at least a minimum encoding level (i.e., to permit higher than minimum encoding levels if otherwise set by the user or system), then an exemplary "Check and Set" encoding level routine **500** is depicted at FIG. **5** (e.g., that may be used as an alternate to the routine of FIG. **3****).** Here, upon entry at **500,** a test is made at **502** for a particular classification status (e.g., perhaps a classification level or an encoding strength level). If that particular status is detected at **502,** then another test is made at **504** to see if the encoding level already associated with the message at hand is at least at the minimum corresponding encoding level. If so, then the message may be encoded at **506** using whatever encoding level has already been assigned to that message. However if the minimum encoding level (e.g., in accordance with an imposed IT Policy) has not already been satisfied, then the minimum encoding level is used to encode the message at **508** before exit is taken at **510.** As those in the art will appreciate, as many similar subsets of code as desired may be utilized for each possible classification status.

As those in the art will appreciate, there may be many variations and modifications of the above described exemplary embodiments which yet retain some or all of the novel features and advantages of these embodiments. Accordingly, all such modifications and variations are intended to be included within the scope of the appended claims.

## Claims

1. A method for automatically applying encoding of classified messages, said method comprising:
for a message to be transmitted, associating one of plural possible classification statuses with the message, wherein said classification status associated with said message is set manually;
before transmitting the message, detecting the classification status associated with the message; and
automatically encoding the message for transmission using an encryption encoding level that corresponds to the detected classification status.

2. The method as in claim 1 wherein the correspondence between classification statuses and encoding levels is set and automatically enforced on a user by an IT Policy, residing in a device used for generating and/or transmitting the message.

3. The method as in claim 1 wherein the classification statuses comprise encryption strength descriptors.

4. The method as in claim 1 wherein the classification levels comprise security level descriptors.

5. The method as in claim 1 wherein the utilized encoding level is at least a minimum encryption encoding level for the detected classification status or of a higher level if otherwise designated.

6. Apparatus for automatically applying encoding of classified messages, said apparatus comprising:
for a message to be transmitted, means (10) for associating one of a plural possible classification statuses with the message, said classification status associated with said message is set manually ;
means (10) for detecting, before transmitting the message, the classification status associated with the message; and
means (10) for automatically encoding the message for transmission using an encryption encoding level that corresponds to the detected classification status.

7. Apparatus as in claim 6 wherein the correspondence between classification statuses and encoding levels is set and automatically enforced on a user by an IT Policy, residing in a device used for generating and/or transmitting the message.

8. Apparatus as in claim 6 wherein the classification statuses comprise encryption strength descriptors.

9. Apparatus as in claim 6 wherein the classification levels comprise security level descriptors.

10. Apparatus as in claim 6 wherein the utilized encoding level is at least a minimum encryption encoding level for the detected classification status or of a higher level if otherwise designated.

11. A digital storage medium having stored therein a computer program which, when executed, automatically causes encoding of classified messages, by:
for a message to be transmitted, associating one of a plural possible classification statuses with the message, wherein said classification status associated with said message is set manually;
before transmitting a message, detecting the classification status associated with the message; and
automatically encoding the message for transmission using an encryption encoding level that corresponds to the detected classification status.

12. The digital storage medium as in claim 11 wherein the correspondence between classification statuses and encoding levels is set and automatically enforced on a user by an IT Policy, residing in a device used for generating and/or transmitting the message.

13. The digital storage medium as in claim 11 wherein the classification statuses comprise encryption strength descriptors.

14. The digital storage medium as in claim 11 wherein the classification levels comprise security level descriptors.

15. The digital storage medium as in claim 11 wherein the utilized encoding level is at least a minimum encryption encoding level for the detected classification status or of a higher level if otherwise designated.

## Patentansprüche

1. Verfahren zum automatischen Anwenden einer Codierung von klassifizierten bzw. geheimen Nachrichten, wobei das Verfahren aufweist:
für eine zu übertragende Nachricht, Zuordnen eines von mehreren möglichen Klassifikationsstatus zu der Nachricht, wobei der Klassifikationsstatus, der zu der Nachricht gehört, manuell gesetzt wird; vor einem Übertragen der Nachricht, Erfassen des Klassifikationsstatus, der zu der Nachricht gehört; und
automatisches Codieren der Nachricht zur Übertragung unter Verwendung eines Verschlüsselungscodierlevels, der dem erfassten Klassifikationsstatus entspricht.

2. Verfahren gemäß Anspruch 1, wobei die Entsprechung zwischen Klassifikationsstatus und Codierlevel durch eine IT-Richtlinie, die sich in einer Vorrichtung befindet, die zum Erzeugen und/oder Übertragen der Nachricht verwendet wird, gesetzt und automatisch einem Benutzer vorgeschrieben wird.

3. Verfahren gemäß Anspruch 1, wobei die Klassifikationsstatus Verschlüsselungsstärkedeskriptoren aufweisen.

4. Verfahren gemäß Anspruch 1, wobei die Klassifikationslevel Sicherheitsleveldeskriptoren aufweisen.

5. Verfahren gemäß Anspruch 1, wobei der verwendete Codierlevel zumindest ein Minimum-Verschlüsselungscodierlevel für den erfassten Klassifikationsstatus ist oder ein höherer Level, wenn anderweitig bestimmt.

6. Vorrichtung zum automatischen Anwenden einer Codierung von klassifizierten bzw. geheimen Nachrichten, wobei die Vorrichtung aufweist:
für eine zu übertragende Nachricht, Mittel (10) zum Zuordnen eines von mehreren möglichen Klassifikationsstatus zu der Nachricht, wobei der Klassifikationsstatus, der zu der Nachricht gehört, manuell gesetzt wird; Mittel (10) zum Erfassen des Klassifikationsstatus, der zu der Nachricht gehört, vor einem Übertragen der Nachricht; und
Mittel (10) zum automatischen Codieren der Nachricht zur Übertragung unter Verwendung eines Verschlüsselungscodierlevels, der dem erfassten Klassifikationsstatus entspricht.

7. Vorrichtung gemäß Anspruch 6, wobei die Entsprechung zwischen Klassifikationsstatus und Codierlevel durch eine IT-Richtlinie, die sich in einer Vorrichtung befindet, die zum Erzeugen und/oder Übertragen der Nachricht verwendet wird, gesetzt und automatisch einem Benutzer vorgeschrieben wird.

8. Vorrichtung gemäß Anspruch 6, wobei die Klassifikationsstatus Verschlüsselungsstärkedeskriptoren aufweisen.

9. Vorrichtung gemäß Anspruch 6, wobei die Klassifikationslevel Sicherheitsleveldeskriptoren aufweisen.

10. Vorrichtung gemäß Anspruch 6, wobei der verwendete Codierlevel zumindest ein Minimum-Verschlüsselungscodierlevel für den erfassten Klassifikationsstatus ist oder ein höherer Level, wenn anderweitig bestimmt.

11. Digitales Speichermedium, das ein Computerprogramm gespeichert hat, das bei Ausführung automatisch eine Codierung von klassifizierten Nachrichten veranlasst durch:
für eine zu übertragende Nachricht, Zuordnen eines von mehreren möglichen Klassifikationsstatus zu der Nachricht, wobei der Klassifikationsstatus, der zu der Nachricht gehört, manuell gesetzt wird; vor einem Übertragen der Nachricht, Erfassen des Klassifikationsstatus, der zu der Nachricht gehört; und
automatisches Codieren der Nachricht zur Übertragung unter Verwendung eines Verschlüsselungscodierlevels, der dem erfassten Klassifikationsstatus entspricht.

12. Digitales Speichermedium gemäß Anspruch 11, wobei die Entsprechung zwischen Klassifikationsstatus und Codierlevel durch eine IT-Richtlinie, die sich in einer Vorrichtung befindet, die zum Erzeugen und/oder Übertragen der Nachricht verwendet wird, gesetzt und automatisch einem Benutzer vorgeschrieben wird.

13. Digitales Speichermedium gemäß Anspruch 11, wobei die Klassifikationsstatus Verschlüsselungsstärkedeskriptoren aufweisen.

14. Digitales Speichermedium gemäß Anspruch 11, wobei die Klassifikationslevel Sicherheitsleveldeskriptoren aufweisen.

15. Digitales Speichermedium gemäß Anspruch 11, wobei der verwendete Codierlevel zumindest ein Minimum-Verschlüsselungscodierlevel für den erfassten Klassifikationsstatus ist oder ein höherer Level, wenn anderweitig bestimmt.

## Revendications

1. Procédé pour appliquer automatiquement un codage de messages classifiés, ledit procédé comprenant :
pour un message devant être transmis, l'association de l'un parmi plusieurs états de classification possibles au message, ledit état de classification associé audit message étant établi manuellement ;
avant la transmission du message, la détection de l'état de classification associé au message ; et
le codage automatique du message pour une transmission à l'aide d'un niveau de codage par cryptage qui correspond à l'état de classification détecté.

2. Procédé selon la revendication 1, dans lequel la correspondance entre les états de classification et les niveaux de codage est établie et automatiquement appliquée à un utilisateur par une politique de traitement de l'information, résidant dans un dispositif utilisé pour générer et/ou transmettre le message.

3. Procédé selon la revendication 1, dans lequel les états de classification comprennent des descripteurs de force de cryptage.

4. Procédé selon la revendication 1, dans lequel les niveaux de classification comprennent des descripteurs de niveau de sécurité.

5. Procédé selon la revendication 1, dans lequel le niveau de codage utilisé est au moins un niveau de codage par cryptage minimal pour l'état de classification détecté ou un niveau supérieur si cela est prévu autrement.

6. Appareil pour appliquer automatiquement un codage de messages classifiés, ledit appareil comprenant :
pour un message devant être transmis, des moyens (10) pour associer l'un parmi plusieurs états de classification possibles au message, ledit état de classification associé audit message étant établi manuellement :
des moyens (10) pour détecter, avant la transmission du message, l'état de classification associé au message ; et
des moyens (10) pour coder automatiquement le message pour une transmission à l'aide d'un niveau de codage par cryptage qui correspond à l'état de classification détecté.

7. Appareil selon la revendication 6, dans lequel la correspondance entre les états de classification et les niveaux de codage est établie et automatiquement appliquée à un utilisateur par une politique de traitement de l'information, résidant dans un dispositif utilisé pour générer et/ou transmettre le message.

8. Appareil selon la revendication 6, dans lequel les états de classification comprennent des descripteurs de force de cryptage.

9. Appareil selon la revendication 6, dans lequel les niveaux de classification comprennent des descripteurs de niveau de sécurité.

10. Appareil selon la revendication 6, dans lequel le niveau de codage utilisé est au moins un niveau de codage par cryptage minimal pour l'état de classification détecté ou un niveau supérieur si cela est prévu autrement.

11. Support de mémorisation numérique comportant, mémorisé sur celui-ci, un programme informatique qui, lorsqu'il est exécuté, provoque automatiquement le codage de messages classifiés, en :
pour un message devant être transmis, associant l'un parmi plusieurs états de classification possibles au message, ledit état de classification associé audit message étant établi manuellement :
avant la transmission d'un message, détectant l'état de classification associé au message ; et
codant automatiquement le message pour une transmission à l'aide d'un niveau de codage par cryptage qui correspond à l'état de classification détecté.

12. Support de mémorisation numérique selon la revendication 11, dans lequel la correspondance entre les états de classification et les niveaux de codage est établie et automatiquement appliquée à un utilisateur par une politique de traitement de l'information, résidant dans un dispositif utilisé pour générer et/ou transmettre le message.

13. Support de mémorisation numérique selon la revendication 11, dans lequel les états de classification comprennent des descripteurs de force de cryptage.

14. Support de mémorisation numérique selon la revendication 11, dans lequel les niveaux de classification comprennent des descripteurs de niveau de sécurité.

15. Support de mémorisation numérique selon la revendication 11, dans lequel le niveau de codage utilisé est au moins un niveau de codage par cryptage minimal pour l'état de classification détecté ou un niveau supérieur si cela est prévu autrement.
